# EUROPEAN PATENT APPLICATION

(11) **EP 1 879 059 A1**
(43) Date of publication of application: **16.01.2008**
(21) Application number: 07013581.9
(22) Date of filing: 11.07.2007
(51) Int. Cl.: G02B 6/00

(54) **Light pipe with minimized thermal expansion effects**

(30) Priority: 11.07.2006 US 819989 P
(71) Applicant: Magna International Inc., Aurora, ON L4G 7K1 (CA)
(72) Inventor: Woodward, Ronald O., Yorktown, Virginia 23693 (US); McFadden, James, Oxford, MI 48371 (US)
(74) Representative: Hössle Kudlek & Partner

(57) **Abstract**

The present invention relates to a light pipe (10) configuration having a light transmitting portion (12) with an inlet (14) and outlet (16). An arm portion (20) connected to the light transmitting portion (12) that has a tab portion (22) that functions to lock the light pipe (10) in place during operation.

## Description

### CROSS-REFERENCE TO RELATED APPLICATIONS

This application claims the benefit of U.S. Provisional Application No. 60/819,989, filed July 11, 2006.

### FIELD OF THE INVENTION

The present invention relates to a light pipe configuration.

### BACKGROUND OF THE INVENTION

The use of light pipes in connection with a light emitting diode (LED) light source for providing various visual displays are becoming more common. The arrangement and design of the various light pipes present several obstacles. For example, the materials used, the shape of the light pipe, and ways of holding the light pipe in relation to the light source are all factors that can influence the performance of the design of a light pipe system. Furthermore, the design considerations must also account for variables related to the kinds of materials being used; for example, thermal expansion can occur with the light pipe materials which make it necessary to consider this effect when designing a light pipe for an LED.

### SUMMARY OF THE INVENTION

The present invention relates to a light pipe configuration having a light transmitting portion with an inlet and outlet. An arm portion connected to the light transmitting portion that has a tab portion that functions to position the light pipe during operation.

### BRIEF DESCRIPTION OF THE DRAWINGS

The present invention will become more fully understood from the detailed description and the accompanying drawings, wherein:
- Figure 1: depicts a plan side view of a light pipe and carrier module; and
- Figure 2: is a plan side view of a self compensating light pipe and carrier module.

### DETAILED DESCRIPTION OF THE PREFERRED EMBODIMENTS

The following description of the preferred embodiment(s) is merely exemplary in nature and is in no way intended to limit the invention, its application, or uses.

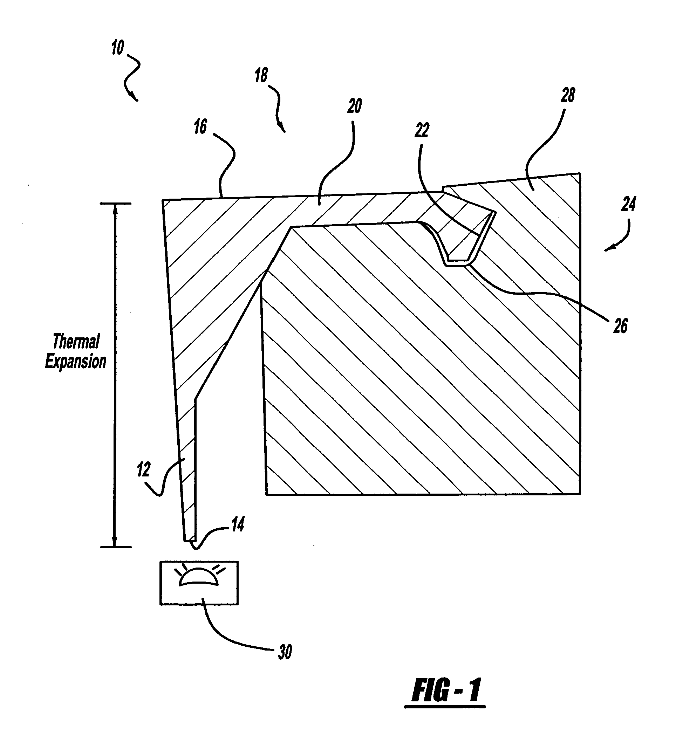

Referring now to Figure 1, a light pipe 10 is generally shown. The light pipe 10 has a light transmitting portion 12 having an inlet 14 and outlet 16. An alignment portion 18 is connected to the light transmitting portion 12. The alignment portion 18 has an arm 20 that extends away from the light transmitting portion 12 and has a tab 22 that extends downward from the arm portion 20. The alignment portion 18 is configured to mate with a carrier module 24. The carrier module 24 has a ledge 26 formed on its surface for receiving the alignment portion 18 of the light pipe 10. The carrier module 24 has a retainer portion 28 or tang that extends over the tab 22 and applies downward force to hold the alignment portion 18 to the ledge 26.

The inlet 14 of the light transmitting portion 12 is spaced apart from a light source 30. The light source 30 can be a light emitting diode (LED) light source that receives light which is then transmitted through the outlet 16. When the light pipe 10 changes in temperature thermal expansion can occur and eliminate the gap between the inlet 14 and light source 30, thus the spacing of the light pipe and light source 30 must be within certain tolerances to optimize light transmission and account for thermal expansion. The gap is preferably 0.1 mm; however, a greater or lesser gap can be incorporated depending upon the needs of a particular application. Such factors as material and spatial requirements will affect the amount of gap between the inlet 14 and light source 30.

In order to maintain the same amount of gap before thermal expansion and after thermal expansion the light pipe 10 and carrier module 24 can be made of the same material, or a material having a substantially identical thermal expansion coefficient. Because the coefficient of thermal expansion is the same, when the light pipe 10 and carrier module 24 expand they will expand at the same rate in opposite directions canceling the effect of thermal expansion, and maintain the gap between the inlet 14 and light source 30.

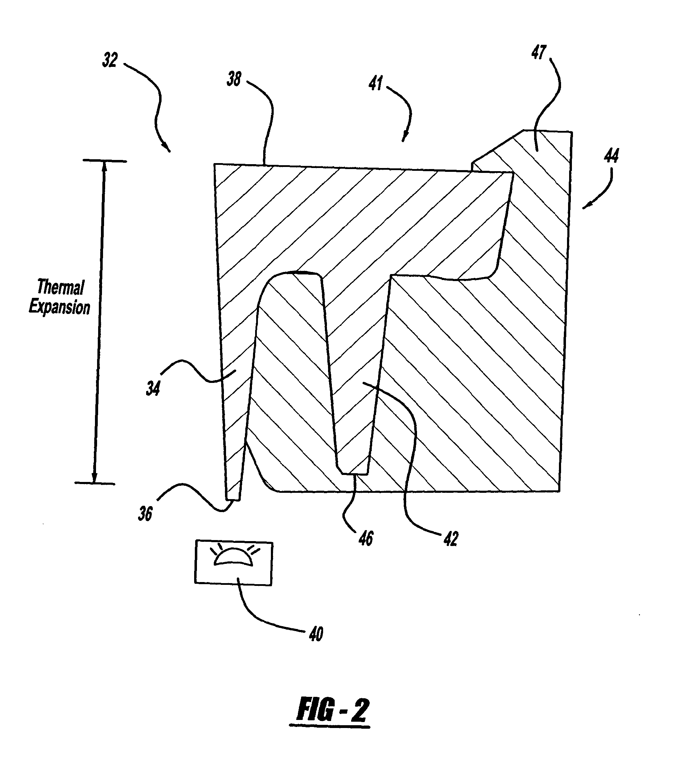

Figure 2 depicts a self compensating light pipe 32. The self compensating light pipe 32 can be used for applications where thermal expansion cannot be compensated for by making the light pipe and carrier module out of the same material or a material with substantially identical thermal expansion characteristics.

The self compensating light pipe 32 has a light transmitting portion 34 having an inlet 36 and outlet 38. A light source 40, which can be a light emitting diode (LED) or some other suitable light source spaced apart from the inlet 36 to create a gap. The gap is preferably 0.1 mm; however, it is possible for greater or smaller gaps to be used depending on the design of a particular application. The light pipe 32 has an attachment portion 41 that has a leg 42 extending generally parallel to the light transmitting portion 34. The leg 42 extends parallel for a portion of the length of the light transmitting portion 34. A carrier module 44 has a ledge 46 that receives the leg 42. The carrier module 44 also has a lock 47 for applying pressure downward on the attachment portion 41 to hold the leg 42 within the ledge 46. The leg 42 and light transmitting portion 34 are made of the same material. When the light transmitting portion expands because of thermal expansion the leg 42 will also expand. Thus thermal expansion is compensated for by the leg 42 and light transmitting portion 34 expanding at the same rate. Therefore, it is not necessary for the carrier module 44 to be made of the same material or have the same thermal expansion properties.

In both embodiments of the invention several light pipes 10, 32 can be fastened to the carrier module 24, 44. The present invention provides a way of compensating for thermal expansion as well as securing the light pipes at a set distance from the light source.

The description of the invention is merely exemplary in nature and, thus, variations that do not depart from the gist of the invention are intended to be within the scope of the invention. Such variations are not to be regarded as a departure from the spirit and scope of the invention.

## Claims

1. A light pipe comprising:
a transmitting portion having an inlet and outlet;
an arm portion and a tab portion connected to said arm portion wherein said arm and tab portion function to lock said light pipe in place.

2. The light pipe of claim 1 further comprising a carrier module having a ledge configured to receive said arm and said tab, said carrier module having a ledge and a lock, wherein said ledge receives said arm and said tab and said lock applies force to said tab to hold said light pipe in position.

3. The light pipe of claim 2 wherein said carrier module, said arm, said tab and said light transmitting portion are comprised of the same material, or a material having substantially the same coefficient of thermal expansion, so that said carrier module and said light transmitting portion incur the same amount of thermal expansion.

4. The light pipe of claim 2 further comprising a light source operably connected to said inlet of said transmitting portion.

5. The light pipe of claim 4 wherein said light source and said inlet are spaced apart and said spacing is maintained after thermal expansion of said light pipe.

6. A light pipe comprising:
a transmitting portion having an inlet and outlet;
a leg portion connected to said transmitting portion, wherein said leg portion extends substantially parallel to said transmitting portion, wherein said leg portion and said light transmitting portion have the same coefficient of thermal expansion.

7. The light pipe of claim 6 further comprising a carrier module having a ledge formed on its surface, wherein said ledge receives said leg and holds said light pipe in position.

8. The light pipe of claim 7 wherein said carrier module further comprises a lock portion that applies force to said leg to hold said leg within said ledge.

9. The light pipe of claim 6 wherein said transmitting portion, said leg portion and said carrier module are comprised of the same material.

10. The light pipe of claim 6 wherein said leg portion counteracts the thermal expansion of said light pipe by expanding with said transmitting portion to move said transmitting portion further away from a light source when thermal expansion occurs.

11. The light pipe of claim 10 wherein said inlet of said transmitting portion is spaced apart from said light source to provide greater than or equal to 0.1 mm, and during thermal expansion said spacing between said inlet and said light source is maintained by the thermal expansion of said leg of said light pipe.

12. A light pipe arrangement comprising:
a light source;
a carrier module having a ledge formed on its surface;
a transmitting portion having an outlet and an inlet, wherein said inlet is spaced apart from said light source; and
an arm portion connected to said transmitting portion wherein said arm portion has a leg portion connectable with said ledge of said carrier module.

13. The light pipe of claim 12 further comprising a ledge and lock on said carrier module for receiving said arm and applying force to said arm to hold said transmitting portion and said leg portion in place.

14. The light pipe of claim 12 wherein said carrier module, said arm portion, and said leg portion are comprised of the same material so that said carrier module and said light transmitting portion incur the same amount of thermal expansion.

15. The light pipe of claim 14 wherein a light source is operably connected to said inlet of said light pipe, and said light source and said inlet are spaced apart and spacing is maintained after thermal expansion of said light pipe.

16. The light pipe of claim 12 wherein said inlet of said transmitting portion is spaced apart from said light source to provide greater than or equal to 0.1 mm, and during thermal expansion said spacing between said inlet and said light source is maintained by the thermal expansion of said leg of said light pipe.
